# EUROPEAN PATENT SPECIFICATION

(11) **EP 2 272 796 B1**
(45) Date of publication and mention of the grant of the patent: **05.08.2020**
(21) Application number: 10006219.9
(22) Date of filing: 16.06.2010
(51) Int. Cl.: C01B 17/88

(54) **PROCESS FOR PRODUCTION OF CONCENTRATED SULPHURIC ACID FROM OFF-GAS**
VERFAHREN ZUR HERSTELLUNG VON KONZENTRIERTER SCHWEFELSÄURE AUS ABGASEN
PROCEDE POUR LA PRODUCTION D'ACIDE SULFURIQUE CONCENTRE A PARTIR DE GAZ D'ECHAPPEMENT

(30) Priority: 07.07.2009 DK 200900833
(43) Date of publication of application: 12.01.2011
(73) Proprietor: Haldor Topsøe A/S, 2800 Kgs. Lyngby (DK)
(72) Inventor: Lykke, Mads, 2700 Brønshøj (DK); Mejlholm, Morten, 3600 Frederikssund (DK); Morsing, Per, 2950 Vedbæk (DK)
(74) Representative: Haldor Topsøe A/S

(56) References cited:
- DE-C- 176 370
- GB-A- 191 117 158
- US-A- 2 738 857
- US-A- 4 673 560
- US-A- 4 828 660
- Müller H.: "Sulfuric Acid and Sulfur Trioxide", Ullmann's Encyclopedia of Industrial Chemistry, 1 January 2000 (2000-01-01), pages 1-71, XP055004903, DOI: 10.1002/14356007.a25 Retrieved from the Internet: URL:http://onlinelibrary.wiley.com/store/1 0.1002/14356007.a25_635/asset/a25_635.pdf? v=1&t=grevldw3&s=7ec5ccd370065cfefbae3e81a 6107e9b9dc7ca90 [retrieved on 2011-08-16]

## Description

The invention relates to a process for production of concentrated sulphuric acid. The invention is specifically directed to concentrating a 90-98wt% hot sulphuric acid to a 95-98.8% concentrated sulphuric acid.

This is especially useful in connection with purification of sulphur containing flue gasses and off-gasses, where sulphur is present as sulphur trioxide and is removed as acid, which is formed by condensation of the sulphur trioxide / water containing gas. This process is called Wet gas Sulphuric Acid process, WSA.

The WSA technology has proven its value in industries like oil refining, metallurgy, petrochemicals production, coking, coal gasification, non-ferrous roasters or smelters, power plants and production of viscose fibers.

It is known to remove sulphur from flue gas or off-gas by oxidising sulphur compounds to sulphur trioxide, and then cool the sulphur trioxide in the presence of the water in the gas to form sulphuric acid, followed by condensation and concentration of the formed acid.

In patent EP 0 844 211 a process for this is disclosed. The condensation takes place in a tower, and the formed sulphuric acid is lead from the bottom of the tower to a concentrator. The heat, which is needed for the concentration process, i. e. evaporation of water, is added by hot air, which is used for stripping out water from the sulphuric acid. However, high temperatures in equipment with sulphuric acid are very demanding for the construction materials.

Another process for concentrating sulphuric acid is described in patent GB 17 158. This process avoids use of hot air by letting the concentration process i.e. evaporation be performed under vacuum.

Removal of sulphur trioxide from off-gases and concentrating a strong sulphuric acid are disclosed by US 6,174,510. The sulphur trioxide is absorbed by a 98.5% sulphuric acid, and it is performed in a rather complex piece of equipment.

US4828660A discloses an apparatus and a system for regeneration and repurifiation of an ultrapure oxidant solution comprising ultrapure sulfuric acid, ultrapure peroxidisul-furic acid and ultrapure water, involving stripping with nitrogen.

US4673560A discloses a process for production of SO₃ from oleum, which includes the the feature of sparging oleum dried air through an oleum stream heated by microwave energy.

As used herein hot sulphuric acid shall unless other temperatures are indicated be construed as sulphuric acid having a temperature above the boiling point of water, i.e. 100°C at 1 atmosphere.

As used herein dried air shall be construed as air or another gas being treated by a water removal process such as cooling or absorption, to arrive at a humidity below saturation at the operating temperature. Dry air shall be construed as synonymous with dried air, and shall not imply and absolute absence of water.

As used herein warm or hot cooling air shall be construed as the air at the outlet from a cooling system, and may therefore have any temperature.

It is an object of the invention to provide a method for producing a 90 - 98% sulphuric acid under mild conditions for the construction materials, for operation with improved consumption figures, and for obtaining high concentrations of the sulphuric acid.

The invention provides a process and exemplifies a system for production of concentrated sulphuric acid from sulphuric acid by stripping the hot sulphuric acid with dried air. The air flow is 0.1- 1 Nm³ air/ kg produced concentrated sulphuric acid. The concentration of the sulphuric acid is 90 - 98 % by weight, and the concentration of the concentrated sulphuric acid is 95 - 98.8 % by weight. The hot sulphuric acid can be above 200°C. The air can be dried in a dehumidifier. The sulphuric acid can be formed by cooling of a gas such as an off-gas comprising a mixture of sulphur trioxide and water and condensing the formed sulphuric acid. The cooling and condensing can take place in an air cooler, and if an absorption dryer is used, it can be regenerated by warm air transferred from the outlet of the air cooler.

Sulphur containing off-gasses are formed by combustion of sulphur containing fuel or as the off-gasses formed in chemical processes, possibly after combustion of off-gasses. The sulphur is then present as sulphur dioxide.

After catalytic oxidation of the sulphur dioxide to sulphur trioxide the gas, also containing water, is cooled and sulphuric acid H₂SO₄ is formed during condensation resulting in 90 - 98 wt% sulphuric acid.

To further concentrate the sulphuric acid, the water must be stripped off. This evaporation of water requires energy, which is in prior art done by adding heat by stripping with hot air, 450°C - 500°C, resulting in 95- 98.8 wt% sulphuric acid.

It has now been found that this concentration can be obtained by stripping with considerably colder air. The air shall in this case be dried, e.g. by passing through a dehumidifier.

In a preferred embodiment of the process, 90 - 98% hot sulphuric acid is further concentrated to 95 - 98.8 wt% by flowing down in a stripper with a packed bed in counter current with air at a temperature from ambient temperature to 600°C, this is typically from 20 - 600°C, preferably from 220 - 450°C, more preferably 280 - 320°C and most preferably 290 - 310°C. The dried air may contain less than 10 g water/kg air, preferably less than 5 g water/kg air. The air flow may be 0.1- 1 Nm³ / kg preferably 0.2 - 0.6 Nm³ air per kg produced concentrated sulphuric acid. The sulphuric acid may come from a storage tank and being pumped through a heater to obtain a temperature above 200°C. A temperature of the sulphuric acid above 200°C, will have the effect of an increase water vapour pressure above the sulphuric acid, and thus and increased stripping of water.

Dried atmospheric air or another gas must be supplied to this stripping process from a system for supplying dried air comprising a dehumidifier

In some cases one or more of the following optional units must also be present in the air stream; an air filter in the event the air is not clean and dust-free, a means of air movement such as a dry air blower in the event the air is not pressurized, and a dry air heater in the event a higher temperature than the supply temperature is required.

The dehumidifier can most conveniently be a desiccant, absorption dehumidifier, and in this case the dehumidifier is regenerated by removing the absorbed water by warm air. Warm air can be generated in a number of ways; some examples are electric heating, heating by steam and by waste heat from other processes.

The temperature of the air to the stripper could be the blower outlet temperature. However, it is preferred that the air from the dehumidifier passes a heater to obtain a temperature of 20 - 30°C above the temperature of the sulphuric acid. This means that most often the dry air temperature is 220 - 450°C preferably 290 - 310°C. This temperature is high enough to avoid any risk of mist formation and low enough to not exceed the design temperature of the equipment.

Another embodiment is applicable, when sulphur trioxide containing gas is the raw material, then gas is cooled and the acid condensed in a cooling tower with tubes by cooling air. The condensed acid leaves the air cooler at 200 - 290°C.

The cooling air having passed the condenser may be appropriate for regeneration of the dehumidifier, and it will furthermore save some energy to use some of the heat content of this warm cooling air. This cooling air having passed the condenser is typically 200 - 260°C and after mixing with cold cooling air, it may be introduced as regenerating media in the dehumidifier most often at 120°C or 160°C.

In this preferred embodiment the condenser and the stripper are built in one and the same column, integrated sulphuric acid column with the stripper part below the condensing part, so the formed acid flows directly down in the packed bed, where the concentration of the sulphuric acid is increased.

In yet another preferred embodiment, sulphuric acid is formed in a separate condensing tower equipped with a number of vertical tubes. The condensed sulphuric acid is then pumped to the top of a stripper, where it passes a bed of packing materials.

The air from the top of the stripper is in this case passed to the gas inlet of the condenser.

Using dried air at a moderate temperature for stripping requires a lower amount of air compared to the use of hot air. Consequently, using dried air has the benefit that the columns can be smaller and more compact, often half the size of columns of prior art.

In all cases it is important to avoid the hot air temperatures of prior art in the towers with strong acid, especially if mal-operation occurs. This may result in hot air flowing through the stripper and back through the condenser if present, and especially the typical condenser has not been designed for the temperature of the hot air of the prior art, i.e. 450 - 500°C. This is avoided in the disclosed process.

Further, the disclosed process requires less energy for air heating compared to prior art, and all of the energy for dehumidifier regeneration can be provided from waste heat from the condenser in the disclosed process, and still a strength of 95 - 98.8 wt% sulphuric acid is obtained.
Fig. 1 is a schematic drawing showing one preferred embodiment of the disclosed process.
Fig. 2 is a schematic drawing showing another preferred embodiment of the disclosed process.
Fig. 3 is a schematic drawing showing yet another preferred embodiment of the disclosed process.
Fig. 4 is a graphic illustration of obtained sulphur acid concentrations with the disclosed process.

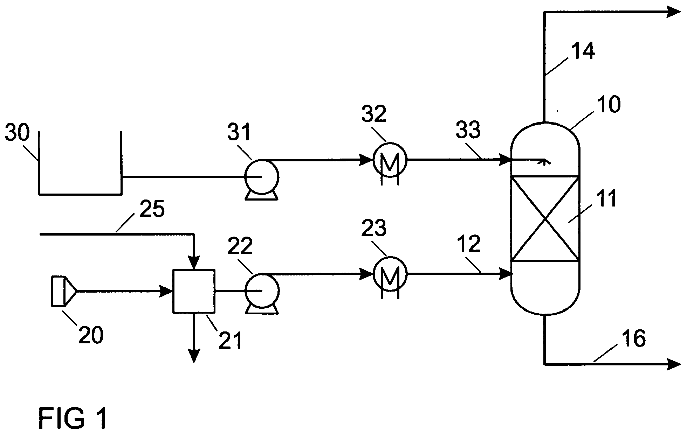

One specific embodiment is shown in Fig. 1.

Sulphuric acid in storage tank 30 is transferred by acid feed pump 31 through acid heater 32 in pipe 33 to stripper 10. In stripper 10 the acid is passed downwards through a packed bed 11 in counter current flow with dry air 12. By this, water is removed from the sulphuric acid and leaves the stripper 10 with the humid air 14, while the concentrated sulphuric acid 16 is withdrawn from the bottom of the stripper 10.

The dry air 12 is atmospheric air, which may have passed a dry air filter 20, before it is dried in dehumidifier 21 upstream of dry air blower 22. The air is blown through dry air heater 23, before it is introduced to the stripper 10 at the bottom.

The dehumidifier 21 is most often an absorption dryer such as a desiccant dehumidifier. It is regenerated by the warm cooling air 25.

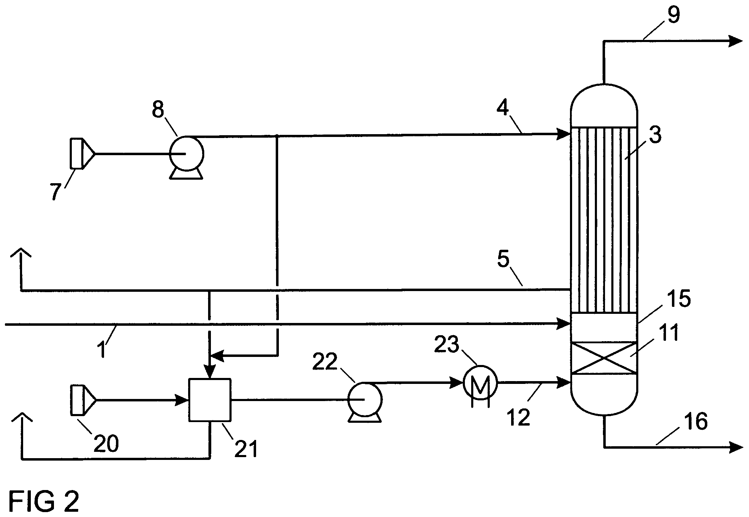

Another preferred embodiment is shown in Fig. 2. Sulphur trioxide containing off-gas 1 is introduced to an integrated sulphuric acid column 15, in which it flows upwards inside tubes 3. The gas is cooled and acid is condensed by cooling air 4 flowing downwards and out as warm cooling gas 5. The cooling air is atmospheric air which may have been cleaned in an air filter 7 before being transferred to the condenser by cooling air blower 8. The formed sulphuric acid flows down through a packed bed 11 in counter current flow with dry air 12. By this, water is stripped out of the sulphuric acid and concentrated sulphuric acid 16 leaves the column 15 at the bottom, while the humid air is combined with the off-gas, and flows up in the tubes 3, where SO₃, and water is cooled and condensed, while the purified off-gas 9 leaves the column 15 at the top.

Also in this embodiment, the dry air 12 is atmospheric air, which may have passed a dry air filter 20, before it is dried in dehumidifier 21 upstream a dry air blower 22. The air is blown through dry air heater 23, before it is introduced to the stripper 10 at the bottom.

The dehumidifier 21 is in this embodiment regenerated by the warm cooling air 5 from the condenser part of the integrated sulphuric acid column 15.

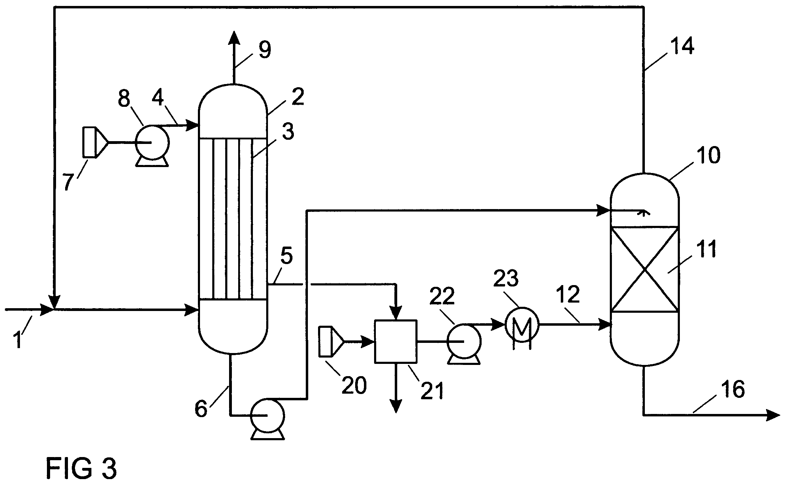

Yet another preferred embodiment is shown in Fig. 3. Sulphur trioxide containing off-gas 1 is introduced to the bottom of WSA condenser 2, in which it flows upwards inside tubes 3. The gas is cooled and the acid is condensed by cooling air 4 flowing downwards and out as warm cooling gas 5. The cooling air is atmospheric air which may have been cleaned in air filter 7 before being transferred to the condenser by cooling air blower 8. The sulphuric acid formed flows down to the condenser bottom, while the purified off-gas 9 leaves the top of the condenser 2. From the condenser bottom the sulphuric acid 6 is pumped to the top of WSA stripper 10, where it is passed downwards through a packed bed 11 in counter current flow with dry air 12, and water is removed from the sulphuric acid and leaves the stripper 10 with the air as humid air 14. This is combined with the off-gas 1 at the inlet of the WSA condenser 2, while the concentrated sulphuric acid 16 is withdrawn from the stripper 10 at the bottom.

Also in this embodiment this dried air 12 is atmospheric air, which has passed a dry air filter 20, before it is dried in dehumidifier 21 upstream of dry air blower 22. The air is blown through dry air heater 23, before it is introduced to the stripper 10 at the bottom.

The dehumidifier 21 is most often an absorption dryer such as a desiccant dehumidifier. It is regenerated by the warm cooling air 5 having passed the condenser 2.

The concentration process according to the invention is a significant improvement of the WSA process, which will have significant value in the same industries such as oil refining, metallurgy, production of petrochemicals, coking, coal gasification, non-ferrous roasters or smelters, power plants and production of viscose fibers. The WSA plant capacities range from 2,600 to 1,200,000 Nm3/h process gas and up to 1140 MTPD sulphuric acid.

### Example 1

Sulphur trioxide containing off-gas is cooled and the acid is condensed in a condenser and the formed sulphuric acid is transferred to a stripper, where the concentration of the acid increased by stripping with dry air, according to an embodiment corresponding to Fig.3.

The prevailing streams, temperatures, pressures and inlet concentrations are given in Table 1 together with the obtained outlet concentrations.

**Table 1**

| | Flow | Temperature | Pressure/conc. | Water content |
|---|---|---|---|---|
| Stripping air, inlet (dry air) | 5200 Nm³/h | 310°C | 45 mbar g | 0.8 mole% |
| Stripping air, outlet (humid air) | 7200 Nm³/h | 233°C | 35 mbar | 6.79 mole% |
| Sulphuric acid, inlet | 10 000 kg/h | 250°C | 93 wt% H₂SO₄ | 7.00 wt% |
| Concentrated sulphuric acid, outlet | 9 540 kg/h | 207°C | 96.3 wt% H₂SO₄ | 3.7 wt% |

The results show that the concentration of a 93 wt% H₂SO₄ is increased by 3.3 wt%.

### Example 2

Sulphur trioxide containing off-gas is cooled and the acid is condensed and the concentration of the formed sulphuric acid is increased in an integrated sulphuric acid column, according to an embodiment corresponding to Fig.2. The prevailing streams, temperatures, pressures and inlet concentrations are given in Table 2 together with the obtained outlet concentrations.

**Table 2**

| | Flow | Temperature | Water content | H₂SO₄ |
|---|---|---|---|---|
| Stripping air, inlet (dry air) | 830 Nm³/h | 290°C | 0.8 vol.% | n. a. |
| Stripping air, outlet (dry air) | 910 Nm³/h | 259°C | 5.6 vol% | n. a. |
| Purified off-gas | 19703 Nm³/h | 100°C | 4.3 vol.% | n. a. |
| SO₃, containing off-gas | 20 435 Nm³/h | 290°C | 6.7 vol.% | n. a. |
| Condensed sulphuric acid | 5694 kg/h | 260°C | 2 wt % | 98 wt% |
| Concentrated sulphuric acid | 5503 kg/h | 239°C | 1.5 wt% | 98.5 wt% |

In this case the condensed acid is 98 wt%, and easily concentrated to 98.5 wt% by the disclosed process. This is important for example in the refinery industry, where this high concentration for a product is needed.

### Example 3

### WSA stripper.

To concentrate around 5000-5500 kg/h sulphuric acid by the process, according to an embodiment corresponding to Fig.1, and by the process of prior art following flows, packing, bed dimensions are required and shown in Table 3.

**Table 3**

| | Disclosed Process | Prior Art |
|---|---|---|
| Acid mass flow | 5544 kg/h | 5174kg/h |
| Air mass flow | 1532 kg/h | 2178 kg/h |
| Temperature, top, acid/gas | 260/253°C | 260/257°C |
| Temperature, bottom, acid/gas | 233/290°C | 263/440°C |
| Packing material | Novalox Saddles 25mm ceramic | Novalox Saddles 38mm ceramic |
| Packing bed volume | 0,225 m³ | 0,773 m³ |
| Packing bed height | 0.659 m | 1.750 m |
| Stripper diameter | 0.659 m | 0.750 m |
| Obtained % H₂SO₄ by wt. | 98.5 % | 98.5% |

98.5 wt% H₂SO₄ is obtained both by the disclosed process and by process of the prior art. But it is seen that considerably less air as well as smaller stripper and smaller bed is required by the disclosed process compared to prior art.

### Example 4

In a column with 40 m2 contact area 5415 kg/h sulphuric acid, 97.44 wt%, 260°C, is stripped with 1000 Nm3/h air, in a process according to an embodiment corresponding to Fig.1. Air with three different degree of humidity is used at 20 - 600°C. The humidities correspond to 0.80, 2.36 and 3.22 % by volume water in the air.

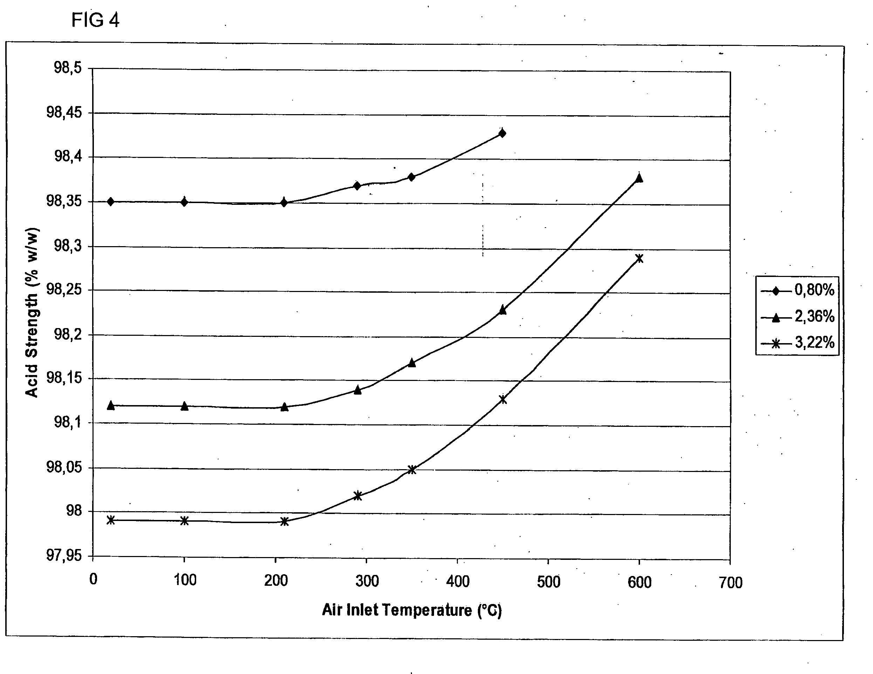

The obtained acid concentrations and temperatures are shown in Table 4 and Fig 4.

**Table 4**

| Air(H2O): | 0.80vol%) | =5g/kg | 2.36vol%) | =14.8 g/kg | 3.22vol% | =20.3g/kg |
|---|---|---|---|---|---|---|
| T(Air In) | % (Acid) | T(Acid) | % (Acid) | T(Acid) | % (Acid) | T(Acid) |
| 20 | 98,35 | 193 | 98,12 | 198 | 97,99 | 199 |
| 100 | 98,35 | 204 | 98,12 | 209 | 97,99 | 212 |
| 210 | 98,35 | 220 | 98,12 | 225 | 97,99 | 227 |
| 290 | 98,37 | 230 | 98,14 | 235 | 98,02 | 237 |
| 350 | 98,38 | 237 | 98,17 | 242 | 98,05 | 244 |
| 450 | 98,43 | 250 | 98,23 | 253 | 98,13 | 255 |
| 600 | | | 98,38 | 269 | 98,29 | 270 |

These results are also shown in Fig. 4, where the outlet concentrations for the three humidities are shown as a function of the air inlet temperature. The three curves clearly show the advantage of stripping with dry air.

## Claims

1. A process for production of concentrated sulphuric acid having a concentration of 95 to 98.8 % by weight by catalytic oxidation of a gas comprising sulphur dioxide and water into a gas comprising a mixture of sulphur trioxide and water, cooling of said gas comprising a mixture of sulphur trioxide and water, condensing a hot sulphuric acid having a concentration of 90 to 98 % by weight and stripping the hot sulphuric acid, wherein the sulphuric acid is stripped with 0.1 to 1 Nm³ dried air/kg produced concentrated sulphuric acid .

2. A process according to claim 1, wherein the temperature of the hot sulphuric acid is above 200°C.

3. A process according to claim 1 to 2, wherein the dried air contains not more than 10 g water/kg air, preferably not more than 5 g water/kg air.

4. A process according to claim 1 to 3, wherein the dried air is at a temperature of 20°C to 600°C, preferably 220°C to 450°C, more preferably 280°C to 320°C, most preferably 290°C to 310°C.

5. A process according to claim 1 to 4, wherein the dried air is supplied from a dehumidifier being an absorption dryer or desiccant dehumidifier.

6. A process according to claim 5, wherein the dehumidifier is adapted for being regenerated by warm air.

7. A process according to claim 1 to 6, wherein the sulphuric acid is stripped with preferably 0.2 - 0.6 Nm³ dry air/kg produced concentrated sulphuric acid.

8. A process according to claim 1-7, wherein the cooling and condensing of the gas comprising a mixture of sulphur trioxide and water takes place in an air cooler.

9. A process according to claim 8, wherein the absorption dryer is adapted for being regenerated by warm air being transferred from the outlet of the air cooler.

## Patentansprüche

1. Verfahren zur Herstellung von konzentrierter Schwefelsäure mit einer Konzentration von 95 bis 98,8 Gew.-% durch katalytische Oxidation eines Gases umfassend Schwefeldioxid und Wasser zu einem Gas umfassend ein Gemisch aus Schwefeltrioxid und Wasser, Abkühlen des Gases umfassend ein Gemisch aus Schwefeltrioxid und Wasser, Kondensieren einer heißen Schwefelsäure mit einer Konzentration von 90 bis 98 Gew.-% und Strippen der heißen Schwefelsäure, wobei die Schwefelsäure mit 0,1 bis 1 Nm³ getrockneter Luft/kg erzeugter konzentrierter Schwefelsäure gestrippt wird.

2. Verfahren gemäß Anspruch 1, wobei die Temperatur der heißen Schwefelsäure über 200°C liegt.

3. Verfahren gemäß Anspruch 1 bis 2, wobei die getrocknete Luft nicht mehr als 10 g Wasser/kg Luft umfasst, vorzugsweise nicht mehr als 5 g Wasser/kg Luft.

4. Verfahren gemäß Anspruch 1 bis 3, wobei die getrocknete Luft eine Temperatur von 20°C bis 600°C, vorzugsweise von 220°C bis 450°C, bevorzugter von 280°C bis 320°C, am meisten bevorzugt von 290°C bis 310°C aufweist.

5. Verfahren gemäß Anspruch 1 bis 4, wobei die getrocknete Luft von einem Luftentfeuchter zugeführt wird, der ein Absorptionstrockner oder ein Trockenmittelentfeuchter ist.

6. Verfahren gemäß Anspruch 5, wobei der Entfeuchter für eine Regeneration durch warme Luft eingerichtet ist.

7. Verfahren gemäß Anspruch 1 bis 6, wobei die Schwefelsäure mit vorzugsweise 0,2 - 0,6 Nm³ trockener Luft/kg erzeugter konzentrierter Schwefelsäure gestrippt wird.

8. Verfahren gemäß Anspruch 1-7, wobei das Abkühlen und Kondensieren des Gases umfassend ein Gemisch aus Schwefeltrioxid und Wasser in einem Luftkühler stattfindet.

9. Verfahren gemäß Anspruch 8, wobei der Absorptionstrockner zum Regenerieren durch warme Luft, die aus dem Auslass des Luftkühlers übertragen wird, eingerichtet ist.

## Revendications

1. Procédé de production d'acide sulfurique concentré ayant une concentration de 95 à 98,8 % en poids par oxydation catalytique d'un gaz comprenant du dioxyde de soufre et de l'eau en un gaz comprenant un mélange de trioxyde de soufre et d'eau, refroidissement dudit gaz comprenant un mélange de trioxyde de soufre et d'eau, condensation d'un acide sulfurique chaud ayant une concentration de 90 à 98 % en poids et extraction de l'acide sulfurique chaud dans lequel l'acide sulfurique est extrait avec 0,1 à 1 Nm³ d'air séché/kg de l'acide sulfurique concentré produit.

2. Procédé selon la revendication 1, dans lequel la température de l'acide sulfurique chaud est supérieure à 200 °C.

3. Procédé selon les revendications 1 à 2, dans lequel l'air séché ne contient pas plus de 10 g d'eau/kg d'air, de préférence pas plus de 5 g d'eau/kg d'air.

4. Procédé selon les revendications 1 à 3, dans lequel l'air séché est à une température de 20 °C à 600 °C, de préférence de 220 °C à 450 °C, plus préférablement de 280 °C à 320 °C, de manière préférée entre toutes de 290 °C à 310 °C.

5. Procédé selon les revendications 1 à 4, dans lequel l'air séché est alimenté par un déshumidificateur qui est un dessiccateur à absorption ou un déshumidificateur desséchant.

6. Procédé selon la revendication 5, dans lequel le déshumidificateur est adapté pour être régénéré par de l'air chaud.

7. Procédé selon les revendications 1 à 6, dans lequel l'acide sulfurique est extrait avec de préférence 0,2 à 0,6 Nm³ d'air sec/kg d'acide sulfurique concentré produit.

8. Procédé selon les revendications 1-7, dans lequel le refroidissement et la condensation du gaz comprenant un mélange de trioxyde de soufre et d'eau ont lieu dans un refroidisseur d'air.

9. Procédé selon la revendication 8, dans lequel le dessiccateur à absorption est adapté pour être régénéré par l'air chaud transféré depuis la sortie du refroidisseur d'air.
